(19) Europäisches Patentamt
European Patent Office
Office européen des brevets

(11) **EP 4 205 406 B1**

(12) **FASCICULE DE BREVET EUROPEEN**

(45) Date de publication et mention de la délivrance du brevet:
**13.03.2024 Bulletin 2024/11**

(21) Numéro de dépôt: **22813688.3**

(22) Date de dépôt: **16.11.2022**

(51) Classification Internationale des Brevets (IPC):
***H04N 23/695*** *(2023.01)*    ***G01J 1/02*** *(2006.01)*

(52) Classification Coopérative des Brevets (CPC):
**H04N 23/695**

(86) Numéro de dépôt international:
**PCT/FR2022/052110**

(87) Numéro de publication internationale:
**WO 2023/089275 (25.05.2023 Gazette 2023/21)**

(54) **PROCÉDÉ D'ACQUISITION D'IMAGES D'UN OBJET SPATIAL EN ORBITE TERRESTRE PAR UN ENGIN SPATIAL EN ORBITE TERRESTRE**

VERFAHREN ZUR ERFASSUNG VON BILDERN EINES RAUMOBJEKTS IM TERRESTRISCHEN ORBIT DURCH EIN RAUMFAHRZEUG IM TERRESTRISCHEN ORBIT

PROCESS FOR THE ACQUISITION OF IMAGES OF A SPACE OBJECT IN TERRESTRIAL ORBIT BY A SPACECRAFT IN TERRESTRIAL ORBIT

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **17.11.2021 FR 2112045**

(43) Date de publication de la demande:
**05.07.2023 Bulletin 2023/27**

(73) Titulaire: **Airbus Defence and Space SAS
31402 Toulouse Cedex 4 (FR)**

(72) Inventeur: **La désignation de l'inventeur n'a pas encore été déposée**

(74) Mandataire: **Plasseraud IP
66, rue de la Chaussée d'Antin
75440 Paris Cedex 09 (FR)**

(56) Documents cités:
**CN-A- 111 121 765    US-A1- 2016 031 559**

**Description**

**Domaine technique**

La présente invention appartient au domaine de l'observation par des engins spatiaux, tels que des satellites, et concerne plus particulièrement un procédé d'acquisition d'images, par un engin spatial en orbite terrestre, représentant un objet spatial en orbite terrestre, ainsi qu'un engin spatial pour la mise en oeuvre d'un tel procédé d'acquisition d'images.

**Etat de la technique**

Dans certaines applications, dites « Space Situation Awareness » ou SSA, il est souhaité pouvoir réaliser des images d'objets spatiaux en orbite terrestre. De telles images peuvent par exemple être utilisées à des fins de renseignement technique sur un objet spatial (par exemple opéré par un tiers ou non opéré dans le cas d'un débris spatial), mais également à des fins d'investigation et d'analyse à la suite d'une anomalie sur cet objet spatial (par exemple pour l'observation de dégâts causés par une micrométéorite, etc.). Les images à acquérir peuvent être des images dans le domaine de longueurs d'ondes visibles, infrarouge, etc.

Un engin spatial, tel qu'un satellite équipé d'un capteur d'images, peut être mis en oeuvre pour acquérir ces images de l'objet spatial. L'avantage d'acquérir des images depuis un satellite est notamment qu'il est alors possible d'observer l'objet spatial de plus près que depuis le sol, et donc d'obtenir des images de l'objet spatial de meilleure résolution. Ainsi, un satellite en orbite terrestre, par exemple en orbite défilante basse (« Low Earth Orbit » ou LEO) ou moyenne (« Medium Earth Orbit » ou MEO) peut être utilisé pour acquérir des images d'un objet spatial en orbite LEO ou MEO.

De manière générale, il est souhaitable d'observer l'objet spatial le plus près possible afin d'obtenir la meilleure résolution possible dans les images acquises. Toutefois, le champ de vue du capteur d'images, représentant l'angle solide pouvant être observé simultanément, peut être assez étroit, par exemple inférieur à 1°. Par conséquent, pour pouvoir acquérir une image de l'objet spatial lorsque le satellite se trouve proche de l'objet spatial, il est nécessaire de disposer d'une bonne connaissance des positions et vitesses respectives de l'objet spatial et du satellite. Dans le cas contraire, la probabilité que l'objet spatial ne se trouve pas à l'endroit prévu, et donc qu'il se trouve en dehors du champ de vue du capteur d'images du satellite lors de l'acquisition de l'image, est élevée.

Si l'erreur d'estimation de la position et de la vitesse du satellite imageur peut être rendue négligeable, par exemple grâce à l'utilisation d'un système de navigation embarqué (de type « Global Navigation Satellite System » ou GNSS), ce n'est généralement pas le cas pour l'objet spatial à imager, notamment du fait que l'objet spatial peut ne pas être opéré (par exemple dans le cas d'un débris spatial) ou bien opéré par un tiers non coopératif auprès duquel il n'est pas possible d'obtenir un vecteur d'état précis de l'objet spatial.

Les sources d'erreur d'estimation de la position et de la vitesse de l'objet spatial à imager comprennent notamment :

- l'imprécision intrinsèque des paramètres orbitaux à deux lignes (« Two-Line Eléments » ou TLE) publics de l'objet spatial, lorsque ceux-ci sont utilisés pour estimer un vecteur d'état de l'objet spatial, et le fait que le modèle analytique utilisé pour la propagation des TLE (« Simplified General Perturbations Satellite Orbit Model » ou SGP4) est intrinsèquement imprécis,
- les incertitudes de propagation entre un instant de dernière mesure du vecteur d'état de l'objet spatial et un instant d'acquisition d'une image de l'objet spatial, dus à une méconnaissance du coefficient de pression de radiation solaire de l'objet spatial ainsi qu'aux incertitudes des modèles de densité atmosphérique et du coefficient balistique de l'objet spatial (pour les objets spatiaux en orbite en LEO),
- l'exécution d'une manoeuvre de contrôle d'orbite par l'objet spatial entre la date du dernier TLE et la date d'acquisition de l'image, etc.

Ainsi, il existe un besoin pour une solution permettant de réaliser des images le plus proche possible de l'objet spatial, afin d'obtenir la meilleure résolution possible dans les images, tout en limitant la probabilité que l'objet spatial ne se trouve pas dans le champ de vue du capteur d'images du satellite lors des acquisitions.

Le document CN111121765A divulgue un procédé d'observation intelligente de la Terre et de surveillance de cibles GEO du ciel avec partage de plateforme de satellite de télédétection; le procédé comprenant les étapes suivantes : installer un plateau tournant stable à trois axes sur une plate-forme de satellite de télédétection, connecter de manière fixe une caméra d'observation de la Terre à la plate-forme satellite, et connecter de manière fixe une caméra de surveillance du ciel à un cadre interne du plateau tournant à trois axes ; planifier une trajectoire d'attitude de la plate-forme de satellite de télédétection, réaliser une imagerie intelligente de la caméra d'observation de la Terre, et réaliser une observation d'imagerie hors orbite lors d'une manoeuvre d'attitude de satellite de télédétection ; et calculer un angle d'instruction du plateau tournant stable à trois axes, et commander le plateau tournant et la caméra de surveillance du ciel pour réaliser une surveillance de traversée efficace de la cible GEO en une journée.

Le document US2016031559A1 divulgue un engin volant autonome (UAV) configuré pour recevoir des informations de cible provenant d'un terminal de commande associé à une cible à suivre par un dispositif d'imagerie couplé à l'UAV. Les informations sur la cible sont utilisées par l'UAV pour suivre automatiquement la cible de manière à maintenir une position et/ou une taille prédéterminées de la cible dans une ou plusieurs images capturées par le dispositif d'imagerie.

**Exposé de l'invention**

La présente invention a pour objectif de remédier à tout ou partie des inconvénients de l'art antérieur, notamment ceux exposés ci-avant.

A cet effet, et selon un premier aspect, il est proposé un procédé d'acquisition, par un engin spatial en orbite terrestre, d'une image dite utile d'un objet spatial en orbite terrestre, ledit objet spatial étant visible depuis l'engin spatial sur une trajectoire suivant laquelle l'objet spatial se rapproche progressivement de l'engin spatial depuis une zone distale amont de ladite trajectoire vers une zone proximale de ladite trajectoire dans laquelle une distance entre l'objet spatial et l'engin spatial est minimisée, ledit procédé comportant des étapes de :

- contrôle de pointage d'un capteur matriciel de détection de l'engin spatial pour orienter une ligne de visée dudit capteur matriciel de détection vers l'objet spatial lorsque ledit objet spatial est situé dans la zone distale amont,
- acquisition, par le capteur matriciel de détection, d'au moins une image dite de détection de l'objet spatial situé dans la zone distale amont,
- détermination d'informations de suivi de trajectoire en fonction de l'au moins une image de détection,
- contrôle de pointage d'un capteur matriciel d'acquisition, en fonction d'informations de suivi de trajectoire, pour orienter une ligne de visée dudit capteur matriciel d'acquisition vers l'objet spatial lorsque ledit objet spatial est situé dans la zone proximale,
- acquisition, par le capteur matriciel d'acquisition, d'au moins une image utile de l'objet spatial situé dans la zone proximale.

Ainsi, l'objet spatial se déplace sur une trajectoire, visible depuis l'engin spatial, selon laquelle ledit objet spatial se rapproche progressivement de l'engin spatial depuis une zone distale amont de ladite trajectoire vers une zone proximale de ladite trajectoire dans laquelle une distance entre l'objet spatial et l'engin spatial est minimisée. Ensuite, la trajectoire comporte également une portion en aval de la trajectoire, qui sort du cadre de la présente divulgation, selon laquelle l'objet spatial s'éloigne progressivement de l'engin spatial jusqu'à ne plus être visible depuis l'engin spatial. Par « visible », on entend ici qu'il existe une ligne optique directe entre l'objet spatial et l'engin spatial (et donc l'objet spatial n'est pas masqué par la Terre), indépendamment de savoir si l'objet spatial se trouve effectivement dans un champ de vue d'un capteur d'images de l'engin spatial.

Ainsi, la zone distale amont correspond à une portion de la trajectoire dans laquelle l'objet spatial est éloigné de l'engin spatial. La zone proximale correspond à une portion de la trajectoire dans laquelle l'objet spatial est proche de l'engin spatial. La zone distale amont et la zone proximale sont distantes l'une de l'autre, c'est-à-dire qu'elles ne sont pas contigües entre elles (et sont donc séparées par une zone intermédiaire amont non vide de la trajectoire). Il est proposé ici d'acquérir principalement deux types d'images de l'objet spatial sur sa trajectoire au moyen d'au moins un capteur matriciel :

- une ou plusieurs images dites de détection, acquises lorsque l'objet spatial se trouve dans la zone distale amont,
- une ou plusieurs images dites utiles, acquises lorsque l'objet spatial se trouve dans la zone proximale.

Par convention, le capteur matriciel utilisé pour acquérir les images de détection est dit « de détection » tandis que le capteur matriciel utilisé pour acquérir les images utiles est dit « d'acquisition ». Toutefois, suivant les modes de mise en oeuvre considérés, le capteur matriciel de détection et le capteur matriciel d'acquisition peuvent être confondus (un même capteur matriciel réalise l'acquisition des images de détection et des images utiles) ou bien distincts.

Les images utiles sont « utiles » par rapport aux images de détection en ce que l'objet spatial y est représenté avec une meilleure résolution que dans les images de détection, dans la mesure où l'objet spatial est plus proche de l'engin spatial. Les images de détection visent notamment, comme leur nom l'indique, à détecter l'objet spatial (sans chercher à avoir une bonne résolution). En effet, dans la zone distale amont, la distance entre l'objet spatial et l'engin spatial est bien plus importante que dans la zone proximale, et la probabilité que l'objet spatial se trouve dans le champ de vue du capteur matriciel de détection malgré une erreur d'estimation de la position de l'objet spatial est bien plus élevée que dans la zone proximale. Il est donc plus facile d'obtenir dans la zone distale amont une image dans laquelle l'objet spatial est effectivement représenté. Même si l'objet spatial est alors représenté avec une faible résolution (l'objet spatial pouvant être représenté par un seul pixel dans certains cas), les images de détection permettent de déterminer la position et/ou la vitesse de l'objet spatial par rapport à l'engin spatial.

A partir d'une image de détection représentant l'objet spatial, il est possible de déterminer des informations de suivi de trajectoire. Ces informations de suivi de trajectoire permettent de réduire les effets de l'erreur d'estimation de la position et/ou de la vitesse de l'objet spatial par rapport à l'engin spatial. Tout ou partie de ces informations de suivi de guidage peuvent donc être utilisées, directement ou indirectement, pour réduire l'erreur d'estimation de la position et/ou de la vitesse de l'objet spatial lorsqu'il se trouve dans la zone proximale, et donc pour réduire la probabilité que l'objet spatial se trouve en dehors du champ de vue du capteur matriciel d'acquisition lorsque l'objet spatial se trouve dans la zone proximale, malgré la proximité entre l'objet spatial et l'engin spatial. L'acquisition des images utiles lorsque l'objet spatial est proche de l'engin spatial (zone proximale) est donc rendue possible grâce à l'acquisition préalable d'images de détection lorsque l'objet spatial est éloigné (zone distale amont) de l'engin spatial.

L'utilisation d'un capteur matriciel pour l'acquisition des images utiles permet d'avoir directement des images 2D de l'objet spatial et rend plus facile la programmation des acquisitions, en particulier par rapport à un capteur de type « push-broom » et compte tenu des vitesses relatives importantes de l'objet spatial par rapport à l'engin spatial. L'utilisation d'un capteur matriciel pour l'acquisition des images de détection permet d'avoir des images 2D de l'objet spatial dans lesquelles les coordonnées de l'objet spatial dans l'image de détection sont représentatives de la position réelle de l'objet spatial sur son orbite et peuvent être utilisées pour déterminer des informations de suivi de trajectoire permettant *in fine* d'orienter correctement la ligne de visée du capteur matriciel d'acquisition lors de l'acquisition des images utiles.

Dans des modes particuliers de mise en oeuvre, le procédé d'acquisition peut comporter en outre, de manière optionnelle, l'une ou plusieurs des caractéristiques suivantes, prises isolément ou selon toutes les combinaisons techniquement possibles.

Dans des modes particuliers de mise en oeuvre, le capteur matriciel d'acquisition de l'engin spatial est également mis en oeuvre pour acquérir des images de zones à la surface de la Terre.

Dans des modes particuliers de mise en oeuvre, la ligne de visée du capteur matriciel d'acquisition est fixe en repère engin spatial, et le contrôle de pointage dudit capteur matriciel d'acquisition consiste en un contrôle d'attitude de l'engin spatial.

Dans des modes particuliers de mise en oeuvre, le capteur matriciel de détection et le capteur matriciel d'acquisition sont un même capteur matriciel, et le procédé d'acquisition comporte :

- des acquisitions successives d'images dites de suivi par le capteur matriciel lors du déplacement de l'objet spatial depuis la zone distale amont vers la zone proximale, et de détermination d'informations de suivi de trajectoire associées,
- un contrôle de pointage du capteur matriciel lors des acquisitions successives d'images de suivi, en fonction des informations de suivi de trajectoire, pour maintenir l'objet spatial dans un champ de vue dudit capteur matriciel.

Dans des modes particuliers de mise en oeuvre, le procédé d'acquisition comporte une étape de prédiction, en fonction des informations de suivi de trajectoire, d'une position de l'objet spatial à un instant ultérieur dit « instant de reprise de suivi », et dans lequel le pointage du capteur matriciel d'acquisition est contrôlé pour avoir la ligne de visée dudit capteur matriciel d'acquisition orientée vers la position prédite à l'instant de reprise de suivi.

Dans des modes particuliers de mise en oeuvre, la position prédite pour l'instant de reprise de suivi est déterminée au moyen d'un filtre d'estimation (par exemple un filtre de Kalman) et les informations de suivi de trajectoire déterminées pour l'image de détection sont utilisées pour recaler un vecteur d'état (comportant par exemple la position et la vitesse de l'objet spatial) dudit filtre d'estimation.

Dans des modes particuliers de mise en oeuvre, le procédé d'acquisition comporte, après l'acquisition de l'au moins une image de détection et avant l'acquisition de l'au moins une image utile, une acquisition d'une ou plusieurs images de zones à la surface de la Terre au moyen du capteur matriciel d'acquisition. En effet, l'erreur sur la position prédite de l'objet spatial étant réduite grâce à la prise en compte des informations de suivi de guidage, l'engin spatial peut effectuer d'autres tâches en attendant l'instant de reprise de suivi, y compris acquérir des images de la Terre au moyen du capteur matriciel d'acquisition.

Dans des modes particuliers de mise en oeuvre, le capteur matriciel de détection est distinct du capteur matriciel d'acquisition. Par exemple, le capteur matriciel de détection peut être un instrument à très grand champ de vue (ne permettant pas d'obtenir des images suffisamment résolues de l'objet spatial dans la zone proximale), dédié à l'acquisition d'images de détection ou bien également mis en oeuvre pour réaliser d'autres opérations. Par exemple, le capteur matriciel de détection est un senseur stellaire également mis en oeuvre pour estimer l'attitude de l'engin spatial.

Dans des modes particuliers de mise en oeuvre, le capteur matriciel de détection et le capteur matriciel d'acquisition sont un même capteur matriciel, de préférence également mis en oeuvre dans le cadre d'une mission d'observation de la Terre pour acquérir des images de la Terre.

Dans des modes particuliers de mise en oeuvre, le contrôle de pointage pour l'acquisition de l'au moins une image de détection comporte un contrôle de la ligne de visée du capteur matriciel pour orienter successivement ladite ligne de visée vers différentes positions possibles de l'objet spatial dans la zone distale amont de la trajectoire, jusqu'à obtenir l'au moins une image de détection représentant ledit objet spatial.

Suivant un deuxième aspect, il est proposé un engin spatial destiné à être placé en orbite terrestre, comportant :

- au moins un capteur matriciel adapté à acquérir des images,
- des moyens de contrôle de pointage de l'au moins un capteur matriciel,
- un circuit de traitement configuré pour contrôler l'au moins un capteur matriciel et les moyens de contrôle de pointage pour mettre en oeuvre un procédé d'acquisition d'image utile selon l'un quelconque des modes de mise en oeuvre de la présente divulgation.

Dans des modes particuliers de réalisation, l'engin spatial peut comporter en outre, de manière optionnelle, l'une ou plusieurs des caractéristiques suivantes, prises isolément ou selon toutes les combinaisons techniquement possibles.

Dans des modes particuliers de réalisation, l'au moins un capteur matriciel comporte un capteur matriciel de détection pour l'acquisition d'images de détection et un capteur matriciel d'acquisition pour l'acquisition d'images utiles, ledit capteur matriciel de détection étant distinct du capteur matriciel d'acquisition. Par exemple, le capteur matriciel de détection peut être un instrument à très grand champ de vue, dédié à l'acquisition d'images de détection ou bien également mis en oeuvre pour réaliser d'autres opérations. Par exemple, le capteur matriciel de détection est un senseur stellaire également mis en oeuvre pour estimer l'attitude de l'engin spatial et le capteur matriciel d'acquisition est également mis en oeuvre dans le cadre d'une mission d'observation de la Terre pour acquérir des images de la Terre.

Dans des modes particuliers de réalisation, l'au moins un capteur matriciel comporte un capteur matriciel unique pour l'acquisition des images de détection et pour l'acquisition des images utiles. De préférence, ce capteur matriciel est également mis en oeuvre dans le cadre d'une mission d'observation de la Terre pour acquérir des images de la Terre.

**Présentation des figures**

L'invention sera mieux comprise à la lecture de la description suivante, donnée à titre d'exemple nullement limitatif, et faite en se référant aux figures qui représentent :

- Figure 1 : une représentation schématique d'un engin spatial et d'un objet spatial en orbite terrestre,
- Figure 2 : une courbe représentant différentes zones d'une trajectoire de l'objet spatial par rapport à l'engin spatial,
- Figure 3 : un diagramme représentant les principales étapes d'un procédé d'acquisition d'image utile,
- Figure 4 : un diagramme représentant un premier mode de mise en oeuvre d'un procédé d'acquisition,
- Figure 5 : une représentation schématique du déroulement au cours du temps du procédé d'acquisition de la figure 4,
- Figure 6 : un diagramme représentant un deuxième mode de mise en oeuvre d'un procédé d'acquisition,
- Figure 7 : une représentation schématique du déroulement au cours du temps du procédé d'acquisition de la figure 6,
- Figure 8 : une représentation schématique du déroulement au cours du temps d'une variante de mise en oeuvre du procédé d'acquisition de la figure 6,
- Figure 9 : une représentation schématique d'un premier exemple de réalisation d'un satellite pour la mise en oeuvre d'un procédé d'acquisition,
- Figure 10 : une représentation schématique d'un deuxième exemple de réalisation d'un satellite pour la mise en oeuvre d'un procédé d'acquisition.

Dans ces figures, des références identiques d'une figure à une autre désignent des éléments identiques ou analogues. Pour des raisons de clarté, les éléments représentés ne sont pas à l'échelle, sauf mention contraire.

**Description des modes de réalisation**

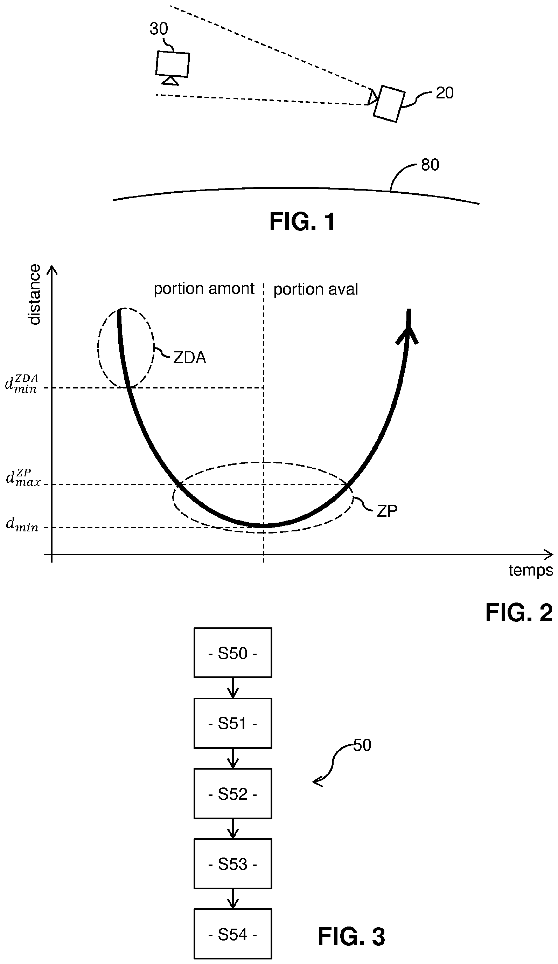

La figure 1 représente schématiquement un engin spatial en orbite défilante autour de la Terre 80. De préférence, l'engin spatial est placé sur une orbite terrestre, par exemple une orbite LEO ou MEO. Rien n'exclut cependant, suivant d'autres exemples, de considérer d'autres types d'orbites, notamment des orbites géosynchrones (« Geosynchronous Orbit » ou GSO).

Dans l'exemple illustré par la figure 1, l'engin spatial est un satellite 20. Rien n'exclut cependant, suivant d'autres exemples non détaillés, de considérer d'autres types d'engins spatiaux (navette spatiale, sonde, etc.).

Le satellite 20 est mis en oeuvre pour acquérir des images d'un objet spatial 30, également en orbite terrestre, par exemple une orbite LEO ou MEO. Dans l'exemple illustré par la figure 1, l'objet spatial 30 est un autre satellite qui peut être opéré par le même opérateur que le satellite 20 ou bien par un opérateur différent (tiers). Suivant d'autres exemples, l'objet spatial 30 peut être un débris spatial ou tout autre type d'objet spatial, artificiel ou non artificiel.

Pour acquérir des images de l'objet spatial 30, celui-ci doit être visible depuis le satellite 20, c'est-à-dire notamment que ledit objet spatial 30 ne doit pas être masqué par la Terre 80.

D'autres contraintes peuvent également s'appliquer, liées par exemple au domaine de longueurs d'ondes dans lequel les images doivent être acquises. Par exemple, si les images doivent être acquises dans le domaine de longueurs d'ondes visibles, l'objet spatial 30 doit en outre être éclairé par le Soleil, alors que cela n'est pas nécessaire si les images doivent être acquises dans le domaine de longueurs d'ondes infrarouge, etc.

Une opportunité d'acquisition d'images se présente lorsque l'objet spatial 30 est visible depuis le satellite 20. De telles opportunités d'acquisition d'images se présentent de manière récurrente, à mesure que l'objet spatial 30 et le satellite 20 se déplacent autour de la Terre 80 sur leurs orbites respectives. La figure 2 représente schématiquement l'évolution au cours du temps de la distance entre l'objet spatial 30 et le satellite 20 lors d'une opportunité d'acquisition d'images. Tel qu'illustré par la figure 2, l'objet spatial 30 suit une trajectoire par rapport au satellite 20, suivant laquelle ledit objet spatial 30 se rapproche progressivement du satellite 20 jusqu'à atteindre une distance minimale $d_{min}$, puis s'éloigne progressivement dudit satellite 20. La portion de la trajectoire au cours de laquelle l'objet spatial 30 et le satellite 20 se rapprochent l'un de l'autre est dite portion amont de la trajectoire, tandis que la portion au cours de laquelle l'objet spatial 30 et le satellite 20 s'éloignent l'un de l'autre est dite portion aval de la trajectoire.

Tel qu'illustré par la figure 2, sur la portion amont, l'objet spatial 30 se rapproche progressivement depuis une zone distale amont ZDA de ladite trajectoire, qui correspond à la zone de la portion amont de ladite trajectoire dans laquelle l'objet spatial 30 est le plus éloigné du satellite 20, vers une zone proximale ZP de ladite trajectoire, qui correspond à la zone de ladite trajectoire dans laquelle l'objet spatial 30 est le plus proche du satellite 20.

C'est donc dans la zone proximale ZP de la trajectoire que les images présentant la meilleure résolution de l'objet spatial 30, dites images utiles, peuvent être acquises depuis le satellite 20. Cependant, c'est également dans la zone proximale ZP que la probabilité de manquer l'objet spatial 30 (objet spatial 30 en dehors du champ de vue) est la plus élevée en cas d'erreurs sur l'estimation de la position et/ou vitesse relative de l'objet spatial 30 par rapport au satellite 20. Dans la zone distale amont ZDA, la résolution de l'objet spatial 30 est bien moindre, mais la probabilité de manquer l'objet spatial 30 y est beaucoup moins élevée que dans la zone proximale ZP.

Tel qu'illustré par la figure 2, la zone distale amont correspond à des distances entre l'objet spatial 30 et le satellite 20 supérieures à une distance $d_{min}^{ZDA}$, et la zone proximale ZP correspond à des distances entre l'objet spatial 30 et le satellite 20 inférieures à $d_{max}^{ZP}$, avec $d_{min}^{ZDA} > d_{max}^{ZP}$. La présente divulgation n'est pas limitée à des valeurs particulières pour les distances $d_{min}^{ZDA}$ et $d_{max}^{ZP}$, et ce qui importe c'est que la zone distale amont ZDA correspond aux positions les plus éloignées de l'objet spatial 30 sur la trajectoire par rapport au satellite 20, et la zone proximale ZP correspond aux positions les plus proches de l'objet spatial 30 sur la trajectoire par rapport au satellite 20. La zone distale amont ZDA et la zone proximale ZP sont en outre distantes, c'est-à-dire non contigües. Par exemple,

$$d_{min}^{ZDA} - d_{max}^{ZP} \geq d_{min}$$ ou

$$d_{min}^{ZDA} - d_{max}^{ZP} \geq 2 \times d_{min}$$, c'est-à-dire que l'objet spatial 30 s'est rapproché du satellite 20 d'au moins $d_{min}$ ou $2 \times d_{min}$ entre la zone distale amont ZDA et la zone proximale ZP. Par exemple, $$d_{min}^{ZDA} \geq 3 \times d_{min}$$ ou $$d_{min}^{ZDA} \geq 5 \times d_{min}$$, et $$d_{max}^{ZP} \leq 2 \times d_{min}$$.

La figure 3 représente les principales étapes d'un exemple de mise en oeuvre d'un procédé 50 d'acquisition d'images utiles au cours du déplacement de l'objet spatial 30 sur la trajectoire visible depuis le satellite 20.

Tel qu'illustré par la figure 3, le procédé 50 d'acquisition comporte tout d'abord une étape S50 de contrôle de pointage d'un capteur matriciel de détection du satellite 20 pour orienter une ligne de visée dudit capteur matriciel de détection vers l'objet spatial 30 lorsque ledit objet spatial est situé dans la zone distale amont ZDA. Le pointage du capteur matriciel de détection est contrôlé pour orienter la ligne de visée vers une position estimée de l'objet spatial 30 sur sa trajectoire, dans la zone distale amont ZDA. Le satellite 20 comporte à cet effet des moyens de contrôle de pointage de la ligne de visée du capteur matriciel de détection, considérés comme connus de l'homme du métier. Il s'agit par exemple de moyens mécaniques (miroirs mobiles, etc.) permettant de modifier la ligne de visée du capteur matriciel de détection en repère satellite et/ou encore de moyens de contrôle d'attitude dudit satellite 20 (roues de réaction, actionneurs gyroscopiques, propulseurs, etc.). Si la ligne de visée du capteur matriciel de détection est fixe en repère satellite, les moyens de contrôle de pointage consistent en des moyens de contrôle d'attitude.

Le procédé 50 d'acquisition comporte alors une étape S51 d'acquisition, par le capteur matriciel de détection, d'au moins une image dite de détection de l'objet spatial 30 situé dans la zone distale amont ZDA.

Pour les raisons évoquées ci-avant, l'erreur sur l'estimation de la position et/ou vitesse de l'objet spatial 30 peut ne pas être négligeable. Toutefois, l'objet spatial 30 se trouvant dans la zone distale amont ZDA, il est peu probable que l'objet spatial 30 se trouve en dehors du champ de vue du capteur matriciel de détection du fait de l'erreur d'estimation. En effet, l'erreur d'estimation va plus probablement entraîner tout au plus un décalage de l'objet spatial 30 dans l'image de détection, dont les coordonnées réelles dans l'image de détection seront différentes des coordonnées théoriques auxquelles l'objet spatial 30 aurait dû se trouver en l'absence d'erreur d'estimation.

Pour réduire davantage la probabilité de manquer l'objet spatial 30 dans la zone distale amont ZDA, il est possible, dans des modes particuliers de mise en oeuvre, de contrôler le pointage du capteur matriciel de détection pour orienter successivement la ligne de visée dudit capteur matriciel de détection vers différentes positions possibles de l'objet spatial 30 dans la zone distale amont ZDA de la trajectoire, jusqu'à obtenir l'au moins une image de détection représentant ledit objet spatial 30. Ainsi, la ligne de visée du capteur matriciel de détection va balayer un angle solide autour de la position estimée de l'objet spatial 30, afin de rechercher l'objet spatial 30 autour de cette position estimée, jusqu'à acquérir une image dans laquelle l'objet spatial 30 est détecté. Un tel balayage peut se faire par exemple en spirale (par exemple en s'éloignant progressivement de la position estimée), en zigzag, etc.

Le procédé 50 d'acquisition comporte également une étape S52 de détermination d'informations dites de suivi de trajectoire en fonction de l'au moins une image de détection. Ces informations de suivi de guidage, qui visent à réduire l'incertitude sur la position de l'objet spatial 30 lorsque celui-ci sera dans la zone proximale ZP, peuvent être de tout type adapté et des exemples seront donnés ci-après dans le cadre de la description de modes particuliers de mise en oeuvre du procédé 50 d'acquisition.

Le procédé 50 d'acquisition comporte ensuite une étape S53 de contrôle de pointage d'un capteur matriciel d'acquisition, en fonction d'informations de suivi de trajectoire, pour orienter une ligne de visée dudit capteur matriciel d'acquisition vers l'objet spatial 30 lorsque ledit objet spatial est situé dans la zone proximale ZP. Le satellite 20 comporte à cet effet des moyens de contrôle de pointage de la ligne de visée du capteur matriciel d'acquisition. Tout ce qui a été ci-avant pour le contrôle de pointage du capteur matriciel de détection s'applique également pour le capteur matriciel d'acquisition.

Le procédé 50 d'acquisition comporte alors une étape S54 d'acquisition, par le capteur matriciel d'acquisition, d'au moins une image utile de l'objet spatial 30 situé dans la zone proximale ZP.

Ainsi, il est donc proposé de réaliser des acquisitions d'images de l'objet spatial 30 lorsque celui-ci se trouve loin du satellite 20 (dans la zone distale amont ZDA de la trajectoire), dites images de détection, qui sont utilisées pour déterminer des informations dites de suivi de guidage permettant de réaliser les acquisitions des images utiles dans de meilleures conditions lorsque l'objet spatial 30 se trouve proche dudit satellite 20 (dans la zone proximale ZP de la trajectoire). Par conséquent, si

$$d_{min}^{ZDA} - d_{max}^{ZP} \geq d_{min} \qquad \text{ou}$$

$$d_{min}^{ZDA} - d_{max}^{ZP} \geq 2 \times d_{min}$$, alors l'objet spatial 30 s'est rapproché du satellite 20 d'au moins $d_{min}$ ou $2 \times d_{min}$ entre l'acquisition de la dernière image de détection et l'acquisition de la première image utile.

Tel qu'indiqué ci-dessus, le capteur matriciel utilisé pour acquérir les images de détection est dit « de détection » tandis que le capteur matriciel utilisé pour acquérir les images utiles est dit « d'acquisition ». Toutefois, suivant les modes de mise en oeuvre considérés, le capteur matriciel de détection et le capteur matriciel d'acquisition peuvent être confondus (un même capteur matriciel réalise l'acquisition des images de détection et des images utiles) ou bien distincts l'un de l'autre.

Dans la suite de la description, on décrit deux modes particuliers de mise en oeuvre, nullement limitatifs de la présente divulgation.

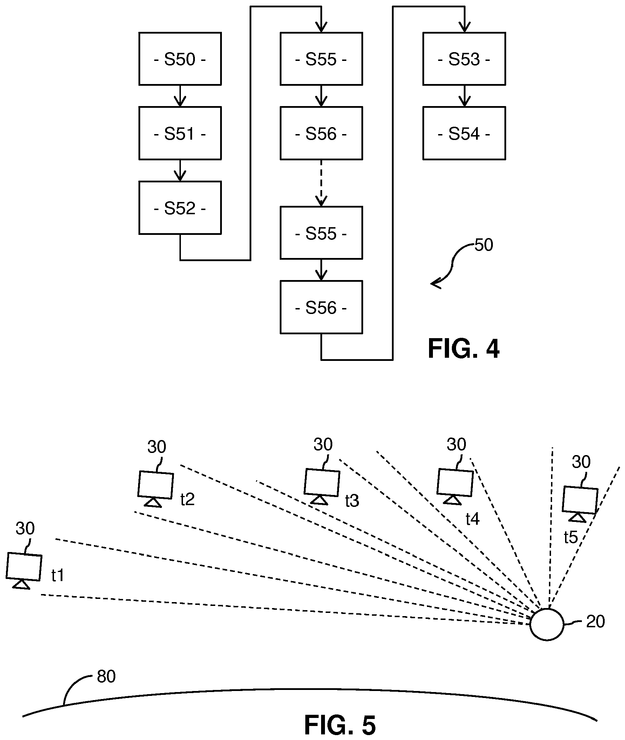

La figure 4 représente schématiquement les principales étapes d'un premier mode de mise en oeuvre du procédé 50 d'acquisition.

Dans le mode de mise en oeuvre illustré par la figure 4, le capteur matriciel de détection et le capteur matriciel d'acquisition sont un même capteur matriciel 40. Par exemple, il peut s'agir d'un capteur matriciel 40 qui est également mis en oeuvre dans le cadre d'une mission d'observation de la Terre 80, pour acquérir des images de la Terre 80. Dans un tel cas, le même capteur matriciel 40 est utilisé pour acquérir des images de la Terre 80 et pour acquérir des images de l'objet spatial 30, et le contrôle de pointage de la ligne de visée comporte ou consiste en un contrôle de l'attitude dudit satellite 20 pour passer d'une orientation vers la Terre 80 vers une orientation vers l'objet spatial 30.

Une fois l'objet spatial 30 détecté dans une image de détection, le satellite 20 va asservir la ligne de visée dudit capteur matriciel 40 sur l'objet spatial 30 jusqu'à ce que l'objet spatial 30 soit suffisamment proche du satellite 20 pour acquérir une image utile dudit objet spatial 30. En d'autres termes, la ligne de visée du capteur matriciel 40 est maintenue pointée en permanence vers l'objet spatial 30 à mesure qu'il se rapproche du satellite 20, et le capteur matriciel 40 suit le déplacement de l'objet spatial 30 de manière continue y compris dans la zone intermédiaire amont de la trajectoire.

Tel qu'illustré par la figure 4, le procédé 50 d'acquisition comporte, outre les étapes décrites en référence à la figure 3, des étapes qui sont exécutées après avoir acquis l'au moins une image de détection et avant d'acquérir une image utile. Plus particulièrement, le procédé 50 d'acquisition comporte les étapes suivantes, qui sont itérées jusqu'à l'étape S53 de contrôle de pointage pour l'acquisition de l'au moins une image utile :

- une étape S55 de contrôle de pointage du capteur matriciel 40, en fonction d'informations de suivi de trajectoire, pour suivre le déplacement de l'objet spatial 30 sur sa trajectoire et le maintenir dans le champ de vue du capteur matriciel 40,
- une étape S56 d'acquisition d'une image dite de suivi par le capteur matriciel 40, et de détermination d'informations de suivi de trajectoire associées.

Ainsi, lors du déplacement de l'objet spatial 30, la ligne de visée du capteur matriciel 40 est contrôlée pour maintenir l'objet spatial 30 dans le champ de vue de l'objet spatial 30, en fonction d'informations de suivi de guidage déterminées à partir d'images (d'abord de détection puis de suivi) acquises lors du déplacement de l'objet spatial 30. Par exemple, les informations de suivi de guidage peuvent être déterminées à partir des coordonnées de l'objet spatial 30 dans les images (d'abord de détection puis de suivi), et utilisées pour asservir le pointage du capteur matriciel 40 pour maintenir l'objet spatial 30 sensiblement aux mêmes coordonnées d'une image à la suivante. Ce contrôle de pointage peut également prendre en compte les déplacements relatifs de l'objet spatial 30 par rapport au satellite 20.

La figure 5 représente schématiquement le déroulement du procédé 50 d'acquisition de la figure 4 au cours du temps (avec ti < tj si i <j). Sur la figure 5, le satellite 20 est toujours représenté dans la même position, mais il est entendu que l'objet spatial 30 et le satellite 20 se déplacent tous deux sur leurs orbites terrestres respectives.

Tel qu'illustré par la figure 5, à un instant t1, l'objet spatial 30 se trouve dans la zone distale amont ZDA et la ligne de visée du capteur matriciel 40 du satellite 20 est orientée en direction dudit objet spatial. Le capteur matriciel 40 réalise à l'instant t1 l'acquisition d'une image de détection. Eventuellement, il est possible d'acquérir plusieurs images de détection afin par exemple d'estimer la vitesse de déplacement de l'objet spatial 30 par rapport au satellite 20. Ensuite, le satellite 20 réalise le suivi de l'objet spatial 30, au moyen du capteur matriciel 40, jusqu'à ce que l'objet spatial 30 soit suffisamment proche pour acquérir une image utile. A cet effet, le capteur matriciel 40 est utilisé pour réaliser plusieurs acquisitions successives d'images de suivi, à des instants t2, t3 et t4 (en pratique le nombre d'images de suivi peut être plus élevé). Simultanément, le pointage du capteur matriciel 40 est contrôlé pour maintenir l'objet spatial 30 dans le champ de vue dudit capteur matriciel, par exemple sensiblement au centre dudit champ de vue et des images de suivi. A un instant t5, l'objet spatial 30 se trouve dans la zone proximale ZP par rapport au satellite 20, et le capteur matriciel 40, dont la ligne de visée est orientée vers l'objet spatial 30, peut réaliser l'acquisition d'une ou de plusieurs images utiles.

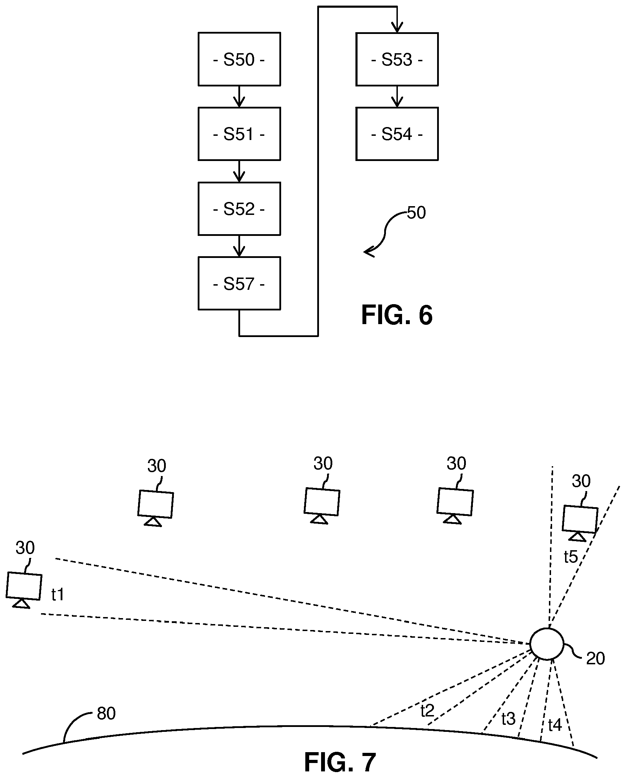

La figure 6 représente schématiquement les principales étapes d'un deuxième mode de mise en oeuvre du procédé 50 d'acquisition.

Dans le mode de mise en oeuvre illustré par la figure 6, le capteur matriciel de détection et le capteur matriciel d'acquisition peuvent être distincts ou bien ils peuvent être un même capteur matriciel 40. Dans la suite de la description, on considère de manière non limitative qu'un même capteur matriciel 40 est mis en oeuvre pour l'acquisition des images de détection et pour l'acquisition des images utiles. Comme précédemment, il peut s'agir d'un capteur matriciel 40 qui est également mis en oeuvre dans le cadre d'une mission d'observation de la Terre 80, pour acquérir des images de la Terre 80.

Une fois l'objet spatial 30 détecté dans une image de détection, le capteur matriciel 40 ne suit pas en continu le déplacement de l'objet spatial 30 jusqu'à ce que ledit objet spatial 30 soit suffisamment proche du satellite 20. En d'autres termes, entre l'acquisition de l'au moins une image de détection et l'acquisition de l'au moins une image utile, il existe un ou plusieurs intervalles temporels, dits intervalles d'interruption de suivi, au cours desquels l'objet spatial 30 ne se trouve plus dans le champ de vue du capteur matriciel 40 (ou ne se trouve plus ni dans le champ de vue du capteur matriciel de détection ni dans le champ de vue du capteur matriciel d'acquisition dans le cas de capteurs matriciels distincts). Au cours d'un intervalle d'interruption de suivi, le satellite 20 peut effectuer d'autres tâches, comme réaliser des acquisitions d'images de la surface de la Terre 80.

Tel qu'illustré par la figure 6, le procédé 50 d'acquisition comporte, outre les étapes décrites en référence à la figure 3, une étape S57 de prédiction, en fonction des informations de suivi de trajectoire déterminées pour l'au moins une image de détection, d'une position de l'objet spatial 30 à un instant ultérieur dit « instant de reprise de suivi ». Comme son nom l'indique, l'instant de reprise de suivi vient après un intervalle d'interruption de suivi, et correspond à un instant auquel l'objet spatial 30 doit à nouveau se trouver dans le champ de vue du capteur matriciel 40. Dans l'exemple illustré par la figure 6, l'instant de reprise de suivi correspond à un instant auquel l'objet spatial 30 est censé se trouver dans la zone proximale ZP, et l'étape S53 de contrôle de pointage pour l'acquisition d'une image utile est exécutée en fonction de la position prédite (et donc indirectement en fonction des informations de suivi de trajectoire) pour avoir la ligne de visée du capteur matriciel 40 orientée vers la position prédite à l'instant de reprise de suivi.

Par exemple, les informations de suivi de trajectoire peuvent être déterminées par comparaison entre les coordonnées théoriques de l'objet spatial 30 dans l'image de détection et les coordonnées réelles de l'objet spatial 30 dans ladite image de détection. Les coordonnées théoriques correspondent aux coordonnées auxquelles l'objet spatial 30 devrait se trouver dans l'image de détection si la position estimée de l'objet spatial 30 sur sa trajectoire était correcte. Les coordonnées réelles correspondent aux coordonnées auxquelles l'objet spatial 30 se trouve réellement dans l'image de détection, qui sont différentes des coordonnées théoriques si la position estimée de l'objet spatial 30 sur sa trajectoire est entachée d'erreurs. Ainsi, une telle comparaison, sur une ou plusieurs images de détection, peut être utilisée pour évaluer l'erreur commise et en tenir compte pour les estimations ultérieures de la position et/ou de la vitesse de l'objet spatial 30. Par exemple, la position prédite pour l'instant de reprise de suivi est déterminée au moyen d'un filtre d'estimation, par exemple un filtre de Kalman ou tout autre type de filtre d'estimation adapté, et les informations de suivi de trajectoire déterminées pour l'image de détection sont utilisées pour recaler un vecteur d'état (comportant par exemple la position et la vitesse de l'objet spatial) dudit filtre d'estimation. Le filtre d'estimation peut ensuite être mis en oeuvre de manière conventionnelle pour prédire la position de l'objet spatial 30 à l'instant de reprise de suivi, en fonction d'un modèle prédéterminé du déplacement de l'objet spatial 30 et du satellite 20.

La figure 7 représente schématiquement le déroulement du procédé 50 d'acquisition de la figure 6 au cours du temps (avec ti < tj si i <j). Sur la figure 7, le satellite 20 est toujours représenté dans la même position, mais il est entendu que l'objet spatial 30 et le satellite 20 se déplacent tous deux sur leurs orbites terrestres respectives.

Tel qu'illustré par la figure 7, à un instant t1, l'objet spatial 30 se trouve dans la zone distale amont ZDA et la ligne de visée du capteur matriciel 40 du satellite 20 est orientée en direction dudit objet spatial. Le capteur matriciel 40 réalise à l'instant t1 l'acquisition d'une image de détection. Eventuellement, il est possible d'acquérir plusieurs images de détection afin par exemple d'estimer la vitesse de déplacement de l'objet spatial 30 par rapport au satellite 20. Le satellite 20 détermine les informations de suivi de trajectoire et détermine la position prédite de l'objet spatial 30 pour un instant t5 de reprise de suivi. Dans l'exemple de la figure 7, à l'instant t5 de reprise de suivi, l'objet spatial 30 se trouve dans la zone proximale ZP par rapport au satellite 20. Il existe donc un intervalle d'interruption de suivi que le satellite 20 utilise, dans l'exemple de la figure 7, pour réaliser des acquisitions d'images de la Terre 80, à des instants t2, t3 et t4, au moyen du capteur matriciel 40. A l'instant t5 de reprise de suivi, la ligne de visée du capteur matriciel 40 a été orientée vers la position prédite, et le capteur matriciel 40 peut réaliser l'acquisition d'une image utile à l'instant t5 ou à un instant ultérieur.

Il est à noter que, suivant d'autres exemples, l'instant de reprise de suivi peut être antérieur à l'entrée de l'objet spatial 30 dans la zone proximale ZP de la trajectoire par rapport au satellite 20. A partir de cet instant de reprise de suivi, il est possible par exemple d'effectuer un suivi de manière sensiblement continue, en appliquant à partir de l'instant de reprise de suivi les étapes décrites en référence à la figure 4 (acquisition d'images de suivi et détermination d'informations de suivi de trajectoire associées, contrôle du pointage pour maintenir l'objet spatial 30 dans le champ de vue du capteur matriciel 40). Suivant un autre exemple, il est possible d'acquérir, à l'instant de reprise de suivi, une image de suivi (au moyen du capteur matriciel de détection ou du capteur matriciel d'acquisition s'il s'agit de capteurs matriciels distincts) représentant l'objet spatial 30 et d'en déduire une position prédite pour un deuxième instant de reprise de suivi à la suite d'un deuxième intervalle d'interruption de suivi, etc.

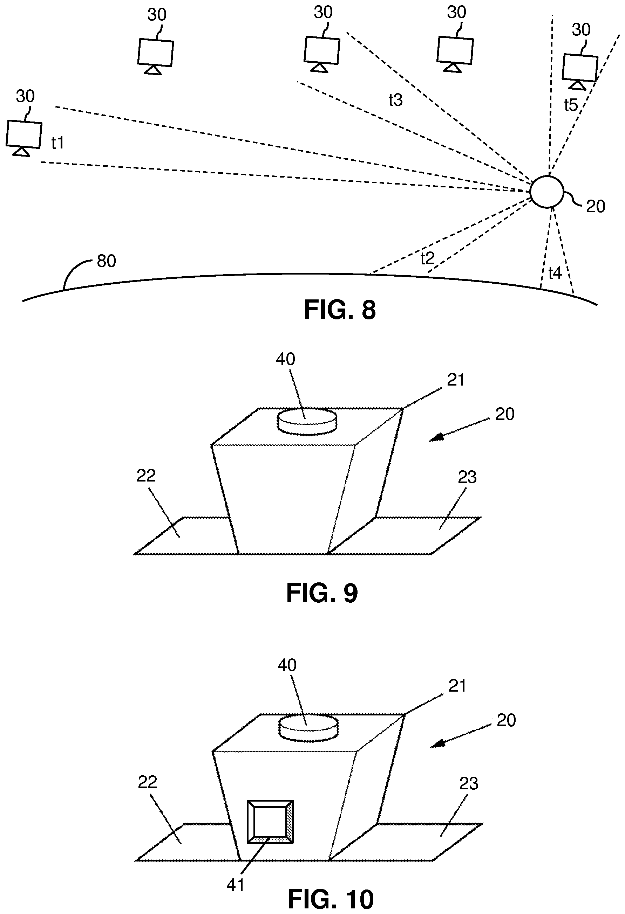

La figure 8 représente schématiquement le déroulement du procédé 50 d'acquisition de la figure 6 au cours du temps (avec ti < tj si i <j), dans le cas où deux intervalles d'interruption de suivi sont prévus. Tel qu'illustré par la figure 8, à un instant t1, l'objet spatial 30 se trouve dans la zone distale amont ZDA et la ligne de visée du capteur matriciel 40 du satellite 20 est orientée en direction dudit objet spatial. Le capteur matriciel 40 réalise à l'instant t1 l'acquisition d'une image de détection et le satellite 20 détermine la position prédite de l'objet spatial 30 pour un instant t3 de reprise de suivi. Au cours d'un premier intervalle d'interruption de suivi, entre les instants t1 et t3, le satellite 20 réalise par exemple une acquisition d'une image de la Terre 80, à un instant t2. A l'instant t3 de reprise de suivi, la ligne de visée du capteur matriciel 40 a été orientée vers la position prédite, et le capteur matriciel 40 réalise l'acquisition d'une image de suivi et le satellite 20 détermine la position prédite de l'objet spatial 30 pour un instant t5 de reprise de suivi, auquel l'objet spatial 30 se trouve dans la zone proximale ZP. Au cours d'un deuxième intervalle d'interruption de suivi, entre les instants t3 et t5, le satellite 20 réalise par exemple une acquisition d'une image de la Terre 80, à un instant t4. A l'instant t5 de reprise de suivi, la ligne de visée du capteur matriciel 40 a été orientée vers la position prédite, et le capteur matriciel 40 peut réaliser l'acquisition d'une image utile à l'instant t5 ou à un instant ultérieur.

La figure 9 représente schématiquement un exemple de réalisation d'un satellite 20 pour la mise en oeuvre du procédé 50 d'acquisition, dans le cas où un même capteur matriciel 40 est utilisé pour l'acquisition des images de détection et les images utiles (et, le cas échéant, les images de suivi).

Tel qu'illustré par la figure 9, le satellite 20 comporte deux générateurs solaires 22, 23 agencés sur des faces respectives opposées d'un corps 21 dudit satellite 20. Dans cet exemple, le capteur matriciel 40 est agencé sur une face reliant lesdites faces portant les générateurs solaires 22, 23. Il est à noter que le capteur matriciel 40 fait typiquement partie d'un instrument d'observation pouvant comporter en outre une optique comportant un ou plusieurs miroirs, le capteur matriciel 40 étant agencé au niveau d'un plan focal de ladite optique.

Le satellite 20 comporte également des moyens de contrôle de pointage du capteur matriciel 40 (non représentés sur les figures). Ces moyens de contrôle de pointage comportent par exemple des moyens de contrôle d'attitude dudit satellite 20, tels que des actionneurs inertiels (roues de réaction, actionneurs gyroscopiques, magnéto-coupleurs, etc.). Outre les moyens de contrôle d'attitude, les moyens de contrôle de pointage peuvent comporter des moyens mécaniques (miroirs mobiles, etc.) permettant de faire varier la ligne de visée du capteur matriciel 40 en repère satellite.

Le satellite 20 comporte en outre un circuit de traitement (non représenté sur les figures), qui contrôle le fonctionnement des moyens de contrôle de pointage et le capteur matriciel 40. Le circuit de traitement comporte par exemple un ou plusieurs processeurs (CPU, DSP, FPGA, ASIC, etc.) et une ou plusieurs mémoires (disque dur magnétique, mémoire électronique, disque optique, etc.) dans lesquelles est par exemple mémorisé un produit programme d'ordinateur, sous la forme d'un ensemble d'instructions de code de programme à exécuter par le ou les processeurs pour mettre en oeuvre les différentes étapes du procédé 50 d'acquisition.

Il est à noter que le satellite 20 peut également comporter, de manière conventionnelle, d'autres éléments tels que des capteurs (senseur stellaire, gyromètre, etc.), qui peuvent être également reliés au circuit de traitement.

La figure 10 représente schématiquement un exemple de réalisation d'un satellite 20 pour la mise en oeuvre du procédé 50 d'acquisition, dans le cas où le capteur matriciel de détection et le capteur matriciel d'acquisition sont deux capteurs matriciels distincts. Le satellite 20 de la figure 10 reprend les éléments du satellite 20 de la figure 9, le capteur matriciel 40 correspondant au capteur matriciel d'acquisition. Le satellite 20 comporte en outre un capteur matriciel de détection 41 agencé dans cet exemple non limitatif sur une face latérale du corps 21 dudit satellite 20.

Le capteur matriciel de détection 41 peut présenter un champ de vue plus large que le capteur matriciel d'acquisition 40 afin de réduire davantage la probabilité de manquer l'objet spatial 30 lors de l'acquisition des images de détection. Le capteur matriciel de détection 41 est par exemple dédié à l'acquisition d'images de détection. Alternativement, le capteur matriciel de détection peut également être mis en oeuvre pour accomplir d'autres tâches. Par exemple, le capteur matriciel de détection 41 peut être un senseur stellaire également mise en oeuvre pour estimer l'attitude du satellite 20.

## Revendications

1. Procédé (50) d'acquisition, par un engin spatial (20) en orbite terrestre, d'une image dite utile d'un objet spatial en orbite terrestre, ledit objet spatial étant visible depuis l'engin spatial sur une trajectoire suivant laquelle l'objet spatial se rapproche progressivement de l'engin spatial depuis une zone distale amont de ladite trajectoire vers une zone proximale de ladite trajectoire dans laquelle une distance entre l'objet spatial et l'engin spatial est minimisée, ledit procédé étant **caractérisé par** des étapes de :

   - contrôle (S50) de pointage d'un capteur matriciel de détection (40, 41) de l'engin spatial (20) pour orienter une ligne de visée dudit capteur matriciel de détection vers l'objet spatial lorsque ledit objet spatial est situé dans la zone distale amont,
   - acquisition (S51), par le capteur matriciel de détection, d'au moins une image dite de détection de l'objet spatial situé dans la zone distale amont,
   - détermination (S52) d'informations de suivi de trajectoire en fonction de l'au moins une image de détection,
   - contrôle (S53) de pointage d'un capteur matriciel d'acquisition (40), en fonction d'informations de suivi de trajectoire, pour orienter une ligne de visée dudit capteur matriciel d'acquisition vers l'objet spatial lorsque ledit objet spatial est situé dans la zone proximale,
   - acquisition (S54), par le capteur matriciel d'acquisition, d'au moins une image utile de l'objet spatial situé dans la zone proximale, l'objet spatial étant représenté dans ladite au moins une image utile avec une meilleure résolution que dans l'au moins une image de détection.

2. Procédé (50) selon la revendication 1, dans lequel le capteur matriciel d'acquisition de l'engin spatial (20) est également mis en oeuvre pour acquérir des images de zones à la surface de la Terre (80).

3. Procédé (50) selon la revendication 2, dans lequel la ligne de visée du capteur matriciel d'acquisition est fixe en repère engin spatial, et le contrôle de pointage dudit capteur matriciel d'acquisition consiste en un contrôle d'attitude de l'engin spatial (20).

4. Procédé (50) selon l'une quelconque des revendications 1 à 3, dans lequel le capteur matriciel de détection et le capteur matriciel d'acquisition sont un même capteur matriciel (40), ledit procédé comportant :

   - des acquisitions successives d'images dites de suivi par le capteur matriciel (40) lors du déplacement de l'objet spatial depuis la zone distale amont vers la zone proximale, et de détermination d'informations de suivi de trajectoire associées,
   - un contrôle de pointage du capteur matriciel (40) lors des acquisitions successives d'images de suivi, en fonction des informations de suivi de trajectoire, pour maintenir l'objet spatial dans un champ de vue dudit capteur matriciel.

5. Procédé (50) selon l'une quelconque des revendications 1 à 3, comportant une étape (S57) de prédiction, en fonction des informations de suivi de trajectoire, d'une position de l'objet spatial à un instant ultérieur dit « instant de reprise de suivi », et dans lequel le pointage du capteur matriciel d'acquisition est contrôlé pour avoir la ligne de visée dudit capteur matriciel d'acquisition orientée vers la position prédite à l'instant de reprise de suivi.

6. Procédé (50) selon la revendication 5, dans lequel la position prédite pour l'instant de reprise de suivi est déterminée au moyen d'un filtre d'estimation et les informations de suivi de trajectoire déterminées pour l'image de détection sont utilisées pour recaler un vecteur d'état du filtre d'estimation.

7. Procédé (50) selon l'une quelconque des revendications 5 à 6, comportant, après l'acquisition de l'au moins une image de détection et avant l'acquisition de l'au moins une image utile, une acquisition d'une ou plusieurs images de zones à la surface de la Terre (80) au moyen du capteur matriciel d'acquisition.

8. Procédé (50) selon l'une quelconque des revendications 5 à 7, dans lequel le capteur matriciel de détection est distinct du capteur matriciel d'acquisition.

9. Procédé (50) selon la revendication 8, dans lequel le capteur matriciel de détection est un senseur stellaire également mis en oeuvre pour estimer l'attitude de l'engin spatial.

10. Procédé (50) selon l'une quelconque des revendications 5 à 7, dans lequel le capteur matriciel de détection et le capteur matriciel d'acquisition sont un même capteur matriciel (40).

11. Procédé (50) selon l'une quelconque des revendications 1 à 10, dans lequel le contrôle de pointage pour l'acquisition de l'au moins une image de détection comporte un contrôle de la ligne de visée du capteur matriciel pour orienter successivement ladite ligne de visée vers différentes positions possibles de l'objet spatial dans la zone distale amont de la trajectoire, jusqu'à obtenir l'au moins une image de détection représentant ledit objet spatial.

12. Engin spatial (20) destiné à être placé en orbite terrestre, comportant :

 - au moins un capteur matriciel (40, 41) adapté à acquérir des images,
 - des moyens de contrôle de pointage de l'au moins un capteur matriciel,
 - un circuit de traitement configuré pour contrôler l'au moins un capteur matriciel et les moyens de contrôle de pointage pour mettre en oeuvre un procédé (50) d'acquisition d'image utile selon l'une quelconque des revendications précédentes.

13. Engin spatial (20) selon la revendication 12, dans lequel l'au moins un capteur matriciel comporte un capteur matriciel de détection (41) pour l'acquisition d'images de détection et un capteur matriciel d'acquisition (40) pour l'acquisition d'images utiles, ledit capteur matriciel de détection étant distinct du capteur matriciel d'acquisition.

14. Engin spatial (20) selon la revendication 13, dans lequel le capteur matriciel de détection (41) est un senseur stellaire également mis en oeuvre pour estimer l'attitude de l'engin spatial.

15. Engin spatial (20) selon la revendication 12, dans lequel l'au moins un capteur matriciel comporte un capteur matriciel (40) unique pour l'acquisition des images de détection et pour l'acquisition des images utiles.

**Patentansprüche**

1. Verfahren (50) zur Erfassung eines sogenannten Nutzbildes eines Raumobjekts in einer Erdumlaufbahn durch ein Raumfahrzeug (20) in einer Erdumlaufbahn, wobei das Raumobjekt von dem Raumfahrzeug aus auf einer Bahn sichtbar ist, auf der sich das Raumobjekt dem Raumfahrzeug von einem distalen stromaufwärtigen Bereich der Bahn zu einem proximalen Bereich der Bahn allmählich nähert, wobei ein Abstand zwischen dem Raumobjekt und dem Raumfahrzeug minimiert ist, wobei das Verfahren durch die folgenden Schritte gekennzeichnet ist:

 - Steuerung (S50) der Ausrichtung eines Detektionsmatrixsensors (40, 41) des Raumfahrzeugs (20), um eine Sichtlinie des Erfassungsmatrixsensors auf das Raumobjekt auszurichten, wenn sich das Raumobjekt in dem distalen stromaufwärtigen Bereich befindet,
 - Erfassung (S51), durch den Detektionsmatrixsensor, wenigstens eines sogenannten Detektionsbildes des Raumobjekts, das sich in dem distalen stromaufwärtigen Bereich befindet,
 - Bestimmung (S52) von Bahntracking-Informationen basierend auf dem wenigstens einen Detektionsbild,
 - Steuerung (S53) der Ausrichtung eines Erfassungsmatrixsensors (40) basierend auf Bahntracking-Informationen, um eine Sichtlinie des Erfassungsmatrixsensors auf das Raumobjekt auszurichten, wenn sich das Raumobjekt in dem proximalen Bereich befindet,
 - Erfassung (S54) wenigstens eines Nutzbildes des in dem proximalen Bereich befindlichen Raumobjekts durch den Erfassungsmatrixsensor, wobei das Raumobjekt in dem wenigstens einen Nutzbild mit einer besseren Auflösung dargestellt wird als in dem wenigstens einen Detektionsbild.

2. Verfahren (50) nach Anspruch 1, wobei der Erfassungsmatrixsensor des Raumfahrzeugs (20) auch zur Erfassung von Bildern von Bereichen auf der Erdoberfläche (80) eingesetzt wird.

3. Verfahren (50) nach Anspruch 2, wobei die Sichtlinie des Erfassungsmatrixsensors in Bezug auf das Raumfahrzeug festgelegt ist und die Steuerung der Ausrichtung des Erfassungsmatrixsensors in einer Steuerung der Lage des Raumfahrzeugs (20) besteht.

4. Verfahren (50) nach einem der Ansprüche 1 bis 3, wobei der Detektionsmatrixsensor und der Erfassungsmatrixsensor ein und derselbe Matrixsensor (40) sind, wobei das Verfahren umfasst:

- aufeinanderfolgende Erfassungen von sogenannten Tracking-Bildern durch den Matrixsensor (40) bei der Bewegung des Raumobjekts von dem distalen stromaufwärtigen Bereich zum proximalen Bereich und der Bestimmung von zugehörigen Bahntracking-Informationen,
- eine Steuerung der Ausrichtung des Matrixsensors (40) bei aufeinanderfolgenden Erfassungen von Tracking-Bildern in basierend auf Bahntracking-Informationen, um das Raumobjekt in einem Sichtfeld des Matrixsensors zu halten.

5. Verfahren (50) nach einem der Ansprüche 1 bis 3, umfassend einen Schritt (S57) zur Vorhersage einer Position des Raumobjekts zu einem späteren Zeitpunkt, dem "Zeitpunkt der Wiederaufnahme des Trackings", basierend auf den Bahntracking-Informationen, und wobei die Ausrichtung des Erfassungsmatrixsensors so gesteuert wird, dass die Sichtlinie des Erfassungsmatrixsensors auf die vorhergesagte Position zum Zeitpunkt der Wiederaufnahme des Trackings ausgerichtet ist.

6. Verfahren (50) nach Anspruch 5, wobei die für den Zeitpunkt der Wiederaufnahme des Trackings vorhergesagte Position mittels eines Schätzfilters bestimmt wird und die für das Detektionsbild bestimmten Bahntracking-Informationen verwendet werden, um einen Zustandsvektor des Schätzfilters wiederherzustellen.

7. Verfahren (50) nach einem der Ansprüche 5 bis 6, das nach der Erfassung des wenigstens einen Detektionsbildes und vor der Erfassung des wenigstens einen Nutzbildes eine Erfassung eines oder mehrerer Bilder von Bereichen der Erdoberfläche (80) mit Hilfe des Erfassungsmatrixsensors umfasst.

8. Verfahren (50) nach einem der Ansprüche 5 bis 7, wobei der Detektionsmatrixsensor vom Erfassungsmatrixsensor verschieden ist.

9. Verfahren (50) nach Anspruch 8, wobei der Detektionsmatrixsensor ein Stellarsensor ist, der auch zur Schätzung der Lage des Raumfahrzeugs eingesetzt wird.

10. Verfahren (50) nach einem der Ansprüche 5 bis 7, wobei der Detektionsmatrixsensor und der Erfassungsmatrixsensor ein und derselbe Matrixsensor (40) sind.

11. Verfahren (50) nach einem der Ansprüche 1 bis 10, wobei die Steuerung der Ausrichtung zur Erfassung des wenigstens einen Detektionsbildes eine Steuerung der Sichtlinie des Matrixsensors umfasst, um die Sichtlinie sukzessive auf verschiedene mögliche Positionen des Raumobjekts im distalen stromaufwärtigen Bereich der Bahn auszurichten, bis das wenigstens eine Detektionsbild erhalten wird, das das Raumobjekt darstellt.

12. Raumfahrzeug (20), das in eine Erdumlaufbahn gebracht werden soll, umfassend:

- wenigstens einen Matrixsensor (40, 41), der dazu ausgebildet ist, Bilder zu erfassen,
- Mittel zur Steuerung der Ausrichtung des wenigstens einen Matrixsensors,
- eine Verarbeitungsschaltung, die dazu ausgebildet ist, den wenigstens einen Matrixsensor und die Mittel zur Steuerung der Ausrichtung zu steuern, um ein Verfahren (50) zur Erfassung von Nutzbildern nach einem der vorhergehenden Ansprüche durchzuführen.

13. Raumfahrzeug (20) nach Anspruch 12, wobei der wenigstens eine Matrixsensor einen Detektionsmatrixsensor (41) zur Erfassung von Detektionsbildern und einen Erfassungsmatrixsensor (40) zur Erfassung von Nutzbildern umfasst, wobei der Detektionsmatrixsensor von dem Erfassungsmatrixsensor verschieden ist.

14. Raumfahrzeug (20) nach Anspruch 13, wobei der Erfassungsmatrixsensor (41) ein Stellarsensor ist, der auch zur Schätzung der Lage des Raumfahrzeugs eingesetzt wird.

15. Raumfahrzeug (20) nach Anspruch 12, wobei der wenigstens eine Matrixsensor einen einzigen Matrixsensor (40) zur Erfassung der Detektionsbilder und zur Erfassung der Nutzbilder umfasst.

**Claims**

1. A method (50) for acquiring, by a spacecraft (20) in Earth orbit, an image called useful image of a space object in Earth orbit, said space object being visible from the spacecraft on a trajectory along which the space object gradually approaches the spacecraft from an upstream distal area of said trajectory towards a proximal area of said trajectory wherein a distance between the space object and the spacecraft is minimized, said method being **characterized by** steps of:

- controlling (S50) the pointing of a detection matrix sensor (40, 41) of the spacecraft (20) to orient a line of sight of said detection matrix sensor towards the space object when said space object is located in the upstream distal area,
- acquiring (S51), by the detection matrix sensor, at least one image called detection image of the space object located in the upstream distal area,
- determining (S52) trajectory tracking information based on the at least one detection image,
- controlling (S53) the pointing of an acquisition matrix sensor (40), based on trajectory tracking information, to orient a line of sight of said acquisition matrix sensor towards the space object when said space object is located in the proximal area,
- acquiring (S54), by the acquisition matrix sensor, at least one useful image of the space object located in the proximal area, the space object being represented in said at least one useful image with a better resolution than in the at least one detection image.

2. The method (50) according to claim 1, wherein the acquisition matrix sensor of the spacecraft (20) is also implemented to acquire images of areas on the surface of the Earth (80).

3. The method (50) according to claim 2, wherein the line of sight of the acquisition matrix sensor is fixed in spacecraft reference frame, and the pointing control of said acquisition matrix sensor consists of an attitude control of the spacecraft (20).

4. The method (50) according to any one of claims 1 to 3, wherein the detection matrix sensor and the acquisition matrix sensor are the same matrix sensor (40), said method including:

   - successive acquisitions of images called tracking images by the matrix sensor (40) during movement of the space object from the upstream distal area to the proximal area, and determination of associated trajectory tracking information,
   - a pointing control of the matrix sensor (40) during successive acquisitions of tracking images, based on the trajectory tracking information, to maintain the space object in a field of view of said matrix sensor.

5. The method (50) according to any one of claims 1 to 3, including a step (S57) of predicting, based on the trajectory tracking information, a position of the space object at a later instant called "instant of resumption of tracking", and wherein the pointing of the acquisition matrix sensor is controlled to have the line of sight of said acquisition matrix sensor oriented towards the predicted position at the instant of resumption of tracking.

6. The method (50) according to claim 5, wherein the predicted position for the tracking resumption instant is determined by means of an estimation filter and the trajectory tracking information determined for the detection image is used to realign a state vector of the estimation filter.

7. The method (50) according to any one of claims 5 to 6, including, after the acquisition of the at least one detection image and before the acquisition of the at least one useful image, an acquisition of one or more images of areas on the surface of the Earth (80) by means of the acquisition matrix sensor.

8. The method (50) according to any one of claims 5 to 7, wherein the detection matrix sensor is distinct from the acquisition matrix sensor.

9. The method (50) according to claim 8, wherein the detection matrix sensor is a stellar sensor also implemented to estimate the attitude of the spacecraft.

10. The method (50) according to any one of claims 5 to 7, wherein the detection matrix sensor and the acquisition matrix sensor are the same matrix sensor (40).

11. The method (50) according to any one of claims 1 to 10, wherein the pointing control for the acquisition of the at least one detection image includes a control of the line of sight of the matrix sensor to successively orient said line of sight towards different possible positions of the space object in the upstream distal area of the trajectory, until obtaining the at least one detection image representing said space object.

12. A spacecraft (20) intended to be placed in Earth orbit, including:

    - at least one matrix sensor (40, 41) adapted to acquire images,
    - means for controlling the pointing of the at least one matrix sensor,
    - a processing circuit configured to control the at least one matrix sensor and the pointing control means to implement a useful image acquisition method (50) according to any one of the preceding claims.

13. The spacecraft (20) according to claim 12, wherein the at least one matrix sensor includes a detection matrix sensor (41) for the acquisition of detection images and an acquisition matrix sensor (40) for the acquisition of useful images, said detection matrix sensor being distinct from the acquisition matrix sensor.

14. The spacecraft (20) according to claim 13, wherein the detection matrix sensor (41) is a stellar sensor also used to estimate the attitude of the spacecraft.

15. The spacecraft (20) according to claim 12, wherein the at least one matrix sensor includes a single matrix sensor (40) for the acquisition of detection images and for the acquisition of useful images.

**FIG. 1**

portion amont ┆ portion aval

$d_{min}^{ZDA}$

$d_{max}^{ZP}$

$d_{min}$

ZDA

ZP

temps

distance

**FIG. 2**

- S50 -

- S51 -

- S52 -

- S53 -

- S54 -

50

**FIG. 3**

FIG. 4

FIG. 5

**FIG. 6**

**FIG. 7**

**FIG. 8**

**FIG. 9**

**FIG. 10**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 111121765 A

- US 2016031559 A1